(19) Europäisches Patentamt
European Patent Office
Office européen des brevets

(11) EP 3 932 523 A1

(12) EUROPEAN PATENT APPLICATION
published in accordance with Art. 153(4) EPC

(43) Date of publication:
05.01.2022 Bulletin 2022/01

(51) Int Cl.:
B01D 53/26 (2006.01)          B60T 17/00 (2006.01)
F04B 41/02 (2006.01)

(21) Application number: 20762450.3

(22) Date of filing: 25.02.2020

(86) International application number:
PCT/JP2020/007467

(87) International publication number:
WO 2020/175468 (03.09.2020 Gazette 2020/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.02.2019 JP 2019031991

(71) Applicant: Nabtesco Automotive Corporation
Tokyo 102-0093 (JP)

(72) Inventors:
• SUGIO Takuya
  Tokyo 102-0093 (JP)
• YOKEDA Kazuya
  Tokyo 102-0093 (JP)

(74) Representative: Grünecker Patent- und
Rechtsanwälte
PartG mbB
Leopoldstraße 4
80802 München (DE)

(54) **AIR SUPPLY SYSTEM, CONTROL METHOD FOR AIR SUPPLY SYSTEM, AND CONTROL PROGRAM FOR AIR SUPPLY SYSTEM**

(57) The present invention maintains excellent dehumidification performance in an air drying circuit while decreasing the consumption of air for purposes other than dehumidification by the air drying circuit. This air supply system (10) comprises: an air drying circuit (11) that is provided between a compressor (4) for sending compressed air and an air tank (30), and that comprises a filter (17) for capturing moisture; and an ECU (80) that controls the air drying circuit (11). The ECU (80): controls the air drying circuit (11) so as to perform a dehumidification operation in which compressed air sent from the compressor (4) is passed through the filter (17) in the forward direction and supplied to the air tank (30), and a filter cleaning operation in which the dried compressed air is passed through the filter (17) in the reverse direction and the fluid that passes through the filter is discharged from a drain discharge port (27); acquires operating information indicating the operating state of the compressor (4); and modifies the frequency at which the filter cleaning operation is performed on the basis of the acquired operating information of the compressor (4).

Fig.1

EP 3 932 523 A1

**Description**

TECHNICAL FIELD

The present disclosure relates to an air supply system, a control method for an air supply system, and a control program for an air supply system.

BACKGROUND ART

In vehicles such as trucks, buses, and construction machines, air pressure systems including a brake system and a suspension system and the like are controlled utilizing compressed air sent from a compressor. The compressed air contains liquid impurities such as moisture suspended in the atmosphere and oil for lubricating the interior of the compressor. If compressed air containing a large amount of moisture and oil enters into the air pressure system, it will lead to the occurrence of rust and swelling of rubber members or the like, and may be the cause of operational failure. Therefore, a compressed-air drying device that removes impurities such as moisture and oil from the compressed air is provided downstream of the compressor.

The compressed-air drying device is equipped with a filter including a desiccant, and various valves. The compressed-air drying device performs a dehumidification operation that removes moisture and the like from compressed air by passing the compressed air through the filter. Dried compressed air generated by the dehumidification operation is stored in an air tank. Further, a cleaning function of the compressed-air drying device decreases as an amount of dried compressed air passing through the device increases. Therefore, the compressed-air drying device performs a regeneration operation that removes, from the desiccant, oil and moisture adsorbed on the desiccant, and discharges the removed oil and moisture as drainage (for example, see Patent Document 1).

PRIOR ART DOCUMENT

Patent Document
Patent Document 1: Japanese Laid-Open Patent Publication No. 2010-201323

SUMMARY OF THE INVENTION

Problems that the Invention is to Solve

Some compressed-air drying device performs a discharge operation that consumes the compressed air sent from the compressor driven by a rotational drive source such as an engine or the dried compressed air stored in the reservoir portion for other purposes than dehumidification like the regeneration operation described above. Such a discharge operation increases the load on the rotational drive source to some extent. On the other hand, in recent years, improvement of the fuel consumption of vehicles has been demanded. Therefore, there is a demand for an improvement that allows the dehumidification functionality of the compressed-air drying device to be maintained while reducing the consumption of compressed air or dried compressed air.

An objective of the present disclosure is to properly maintain the dehumidification functionality of an air drying circuit while reducing the consumption of air by the air drying circuit for other purposes than dehumidification.

Means for Solving the Problems

An air supply system that solves the aforementioned problem includes: an air drying circuit provided between a compressor for sending compressed air and a reservoir portion for storing dried compressed air, the air drying circuit having a filter for trapping moisture; and a control device for controlling the air drying circuit, and the control device controls the air drying circuit to execute a dehumidification operation of passing the compressed air sent from the compressor through the filter in a forward direction to supply the compressed air to the reservoir portion, controls the air drying circuit to execute a filter clearance operation of passing the dried compressed air through the filter in a reverse direction to discharge, from a discharge port, a fluid having passed through the filter, acquires operation information that indicates an operation state of the compressor, and changes a frequency of execution of the filter clearance operation based on the acquired operation information on the compressor.

A control method for an air supply system that solves the aforementioned problem is a control method for an air supply system that includes: an air drying circuit provided between a compressor for sending compressed air and a reservoir portion for storing dried compressed air, the air drying circuit having a filter for trapping moisture; and a control device for controlling the air drying circuit. The method includes, by the control device, controlling the air drying circuit to execute a dehumidification operation of passing the compressed air sent from the compressor through the filter in a forward direction to supply the compressed air to the reservoir portion, controlling the air drying circuit to execute a filter clearance operation of passing the dried compressed air through the filter in a reverse direction to discharge, from a discharge port, a fluid having passed through the filter, acquiring operation information that indicates an operation state of the compressor, and changing a frequency of execution of the filter clearance operation based on the acquired operation information on the compressor.

A control program for an air supply system that solves the aforementioned problem is a control program for an air supply system including: an air drying circuit provided between a compressor for sending compressed air and a reservoir portion for storing dried compressed air, the air drying circuit having a filter for trapping moisture; and a control device for controlling the air drying circuit, and the control program makes the control device function as a dehumidification execution portion for controlling the air drying circuit to execute a dehumidification operation of passing the compressed air sent from the compressor through the filter in a forward direction to supply the compressed air to the reservoir portion, a filter clearance operation execution portion for controlling the air drying circuit to execute a filter clearance operation of passing the dried compressed air through the filter in a reverse direction to discharge, from a discharge port, a fluid having passed through the filter, an acquisition portion that acquires operation information that indicates an operation state of the compressor, and a change portion that changes a frequency of execution of the filter clearance operation based on the acquired operation information on the compressor.

When the continuous or discontinuous operation time of the compressor in a time period is long, for example, the amount of air passing through the filter in the time period is also great, and therefore, the amount of moisture trapped by the filter is also inevitably great. In addition, as the operation time of the compressor increases, the temperature of the compressed air rises, and the amount of moisture contained in a unit volume of compressed air tends to increase. According to the configurations described above, the control device changes the frequency of the filter clearance operation based on the operation information on the compressor. That is, the control device can reduce the frequency of the filter clearance operation if the control device determines, based on the operation state of the compressor, that a higher priority needs to be given to supplying dried compressed air from the reservoir portion to other devices than the air drying circuit. The control device can also increase the frequency of the filter clearance operation if the control device determines, based on the operation state of the compressor, that clearance of the filter needs to be performed.

In the air supply system described above, the control device may be configured to make the frequency of execution of the filter clearance operation higher than the frequency of execution in a first operation state when it is determined, based on the operation information, that the operation state of the compressor is a second operation state, and an amount of air sent from the compressor in a time period in the second operation state may be greater than the amount of air sent from the compressor in the time period in the first operation state.

When the operation state of the compressor is the second operation state, it is estimated that the amount of air passing through the filter is great, and as a result, the amount of moisture trapped by the filter is also great. Further, when the operation state of the compressor is the second operation state, the temperature of the compressed air sent from the compressor is high, and therefore, the amount of moisture contained in the compressed air also tends to be great. According to the configuration described above, when the operation state of the compressor is the second operation state, the frequency of the discharge operation is increased, and therefore, the moisture trapped by the filter can be discharged at high frequency. Therefore, the dehumidification performance of the filter can be properly maintained.

In the air supply system described above, the control device may be configured not to execute the filter clearance operation when it is determined that the operation state of the compressor is a third operation state, and the amount of air sent from the compressor in a time period in the third operation state may be greater than the amount of air sent from the compressor in the time period in the second operation state.

According to the configuration described above, when the compressor is in the third operation state, the filter clearance operation is not executed. Therefore, the operation mode is not switched to the filter clearance operation in a situation in which the amount of dried compressed air consumed by another device than the air drying circuit is great, and therefore, the supply of the dried compressed air to the device can be continued.

In the air supply system described above, the air drying circuit may include: a connection passage that connects the compressor and the filter to each other; a supply passage through which the dried compressed air having passed through the filter passes; and a discharge valve connected to a branch passage branched from the connection passage for executing a discharge operation of allowing the branch passage to communicate with the discharge port to discharge the fluid having passed through the filter, the control device may control the air drying circuit to executes, as the filter clearance operation, a purge operation of opening the discharge port and passing dried compressed air in the air drying circuit through the filter in the reverse direction, and the control device may be configured to change a frequency of the purge operation based on the operation information on the compressor.

According to the configuration described above, the frequency of the purge operation can be changed based on the operation state of the compressor.

In the air supply system described above, the control device may be configured to: acquire a contained moisture amount of the dried compressed air supplied to the reservoir portion, determine to execute the purge operation when the contained moisture amount is equal to or greater than a threshold, and set the threshold to be lower when the operation state of the compressor is the second operation state than when the operation state of the compressor is not the second operation state.

According to the configuration described above, since the threshold of the contained moisture amount is changed based on the operation state of the compressor, the purge operation is likely to be performed even when compressed air in a state of high wetness is sent from the compressor, the filter traps a large amount of moisture, and the dried compressed air having passed through the filter is in a state of significantly low wetness. Therefore, the frequency of the purge operation can be optimized.

In the air supply system described above, the control device may be configured to make the frequency of execution of the filter clearance operation lower than the frequency of execution in a first operation state when it is determined, based on the operation information, that the operation state of the compressor is a second operation state, and an amount of air sent from the compressor in the second operation state may be greater than the amount of air sent from the compressor in the first operation state.

According to the configuration described above, when the operation state of the compressor is the second operation state, the frequency of the discharge operation can be decreased so that a sufficient amount of dried compressed air is stored in the reservoir portion, thereby giving a higher priority to supplying dried compressed air to other devices than the air drying circuit.

In the air supply system described above, the air drying circuit may include: a connection passage that connects the compressor and the filter to each other; a supply passage through which the dried compressed air having passed through the filter passes; and a discharge valve connected to a branch passage branched from the connection passage for executing a discharge operation of allowing the branch passage to communicate with the discharge port to discharge the fluid having passed through the filter, the control device may control the air drying circuit to executes, as the filter clearance operation, a regeneration operation of opening the discharge valve and passing dried compressed air in the reservoir portion through the filter in the reverse direction, and the control device may be configured to change a frequency of the regeneration operation based on the operation information on the compressor.

According to the configuration described above, when the operation state of the compressor is the second operation state, the frequency of the regeneration operation is changed, and therefore, a higher priority can be given to supplying dried compressed air to other devices than the air drying circuit, for example.

An air supply system that solves the aforementioned problem includes: an air drying circuit provided between a compressor for sending compressed air and a reservoir portion for storing dried compressed air, the air drying circuit having a filter for trapping moisture; and a control device for controlling the air drying circuit, and the control device may be configured to: control the air drying circuit to execute a dehumidification operation of passing the compressed air sent from the compressor through the filter in a forward direction to supply the compressed air to the reservoir portion, control the air drying circuit to execute an oil discharge operation of discharging the compressed air sent from the compressor from a discharge port without passing the compressed air through the filter, acquire operation information that indicates an operation state of the compressor, and change a frequency of execution of the oil discharge operation based on the acquired operation information on the compressor.

A control method for an air supply system that solves the aforementioned problem is a control method for an air supply system that includes: an air drying circuit provided between a compressor for sending compressed air and a reservoir portion for storing dried compressed air, the air drying circuit having a filter for trapping moisture; and a control device for controlling the air drying circuit. The method includes, by the control device: controlling the air drying circuit to execute a dehumidification operation of passing the compressed air sent from the compressor through the filter in a forward direction to supply the compressed air to the reservoir portion, controlling the air drying circuit to execute an oil discharge operation of discharging the compressed air sent from the compressor from a discharge port without passing the compressed air through the filter, acquiring operation information that indicates an operation state of the compressor, and changing a frequency of execution of the oil discharge operation based on the acquired operation information on the compressor.

A control program for an air supply system that solves the aforementioned problem is a control program for an air supply system including: an air drying circuit provided between a compressor for sending compressed air and a reservoir portion for storing dried compressed air, the air drying circuit having a filter for trapping moisture; and a control device for controlling the air drying circuit, and the control program makes the control device function as: a dehumidification execution portion for controlling the air drying circuit to execute a dehumidification operation of passing the compressed air sent from the compressor through the filter in a forward direction to supply the compressed air to the reservoir portion, a discharge operation execution portion for controlling the air drying circuit to execute an oil discharge operation of discharging the compressed air sent from the compressor from a discharge port without passing the compressed air through the filter, an acquisition portion that acquires operation information that indicates an operation state of the compressor, and a change portion that changes a frequency of execution of the oil discharge operation based on the acquired operation information on the compressor.

When the continuous or discontinuous operation time of the compressor in a time period is long, for example, the amount of air passing through the filter in the time period is also great, and therefore, the amount of oil trapped by the filter is also inevitably great. In addition, as the operation time of the compressor increases, the temperature of the compressed air rises, and the amount of oil contained in a unit volume of compressed air tends to increase. According to the configurations described above, the control device changes the frequency of the oil discharge operation based on the operation information on the compressor. That is, the control device can reduce the frequency of the oil discharge operation if the control device determines, based on the operation state of the compressor, that a higher priority needs to be given to supplying dried compressed air from the reservoir portion to other devices than the air drying circuit. The control device can also discharge the compressed air containing a large amount of oil without passing the compressed air through the filter to reduce the load on the filter if the control device determines, based on the operation state of the compressor, that the oil discharge operation needs to be performed.

In the air supply system described above, the control device may be configured to make the frequency of execution of the oil discharge operation higher than the frequency of execution in a first operation state when it is determined, based on the operation information, that the operation state of the compressor is a second operation state, and an amount of air sent from the compressor in a time period in the second operation state may be greater than the amount of air sent from the compressor in the time period in the first operation state.

When the operation state of the compressor is the second operation state, it is estimated that the amount of air passing through the filter is great, and as a result, the amount of oil trapped by the filter is also great. Further, when the operation state of the compressor is the second operation state, the temperature of the compressed air sent from the compressor is high, and therefore, the amount of oil or the like contained in the compressed air also tends to be great. According to the configuration described above, when the operation state of the compressor is the second operation state, the frequency of the discharge operation is increased, and therefore, the oil trapped by the filter can be discharged at high frequency. Therefore, the performance of the filter can be properly maintained.

In the air supply system described above, the control device may be configured not to execute the oil discharge operation when it is determined that the operation state of the compressor is a third operation state, and the amount of air sent from the compressor in a time period in the third operation state may be greater than the amount of air sent from the compressor in the time period in the second operation state.

According to the configuration described above, when the compressor is in the third operation state, the filter clearance operation is not executed. Therefore, the operation mode is not switched to the discharge operation in a situation in which the consumed amount of dried compressed air is great, and therefore, the supply of the dried compressed air to the device can be continued.

In the air supply system described above, the control device may be configured to: acquire an operation time and a non-operation time of the compressor as the operation state of the compressor, and calculate an operating rate of the compressor based on the acquired operation time and non-operation time.

The operation time of the compressor has an effect on the temperature of the compressed air, and therefore, the timing of performing an operation other than the dehumidification operation can be properly determined by determining the operation state of the compressor based on the operation time.

ADVANTAGEOUS EFFECTS OF INVENTION

According to the present disclosure, the dehumidification functionality of an air drying circuit can be properly maintained while reducing the consumption of air for other purposes than dehumidification by the air drying circuit.

BRIEF DESCRIPTION OF THE DRAWINGS

[Figure 1] Figure 1 is a configuration diagram illustrating a schematic configuration of an air supply system according to an embodiment.
[Figure 2] Figure 2A to Figure 2F are diagrams illustrating first to sixth operation modes of the air drying circuit according to the embodiment in Figure 1.
[Figure 3] Figure 3 is a schematic diagram showing start threshold information according to the embodiment in Figure 1.
[Figure 4] Figure 4 is a flowchart illustrating an example of a procedure of supplying compressed air according to the embodiment in Figure 1.
[Figure 5] Figure 5 is a flowchart illustrating an example of a procedure of updating a start threshold according to the embodiment in Figure 1.

[Figure 6] Figure 6 is a flowchart illustrating an example of a procedure of a clearance process according to the embodiment in Figure 1.
[Figure 7] Figure 7 is a flowchart illustrating an example of a procedure of an oil cut operation according to the embodiment in Figure 1.

MODES FOR CARRYING OUT THE INVENTION

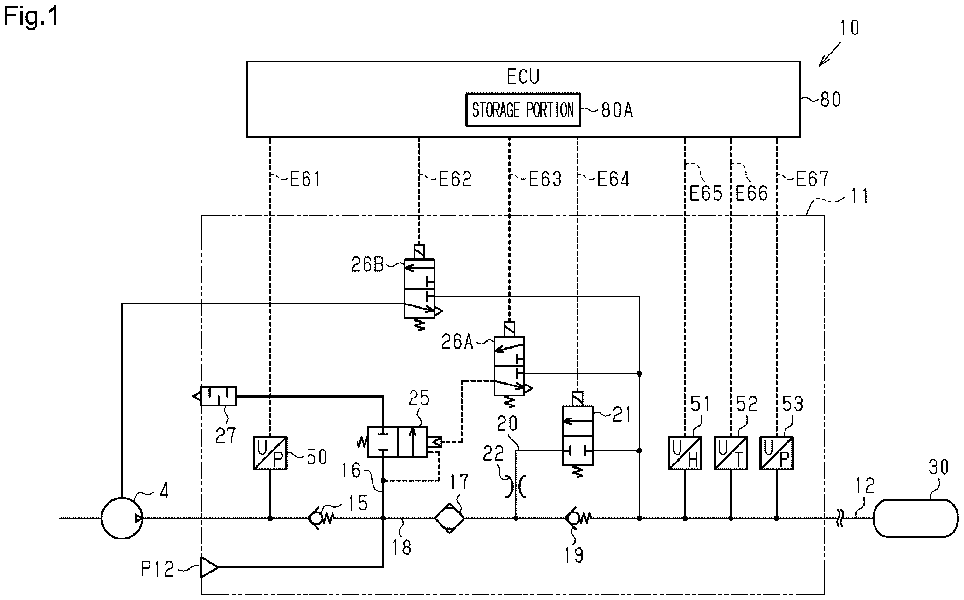

An air supply system according to an embodiment will be described with reference to Figure 1 to Figure 7. The air supply system is installed in a vehicle such as a truck, a bus, or a construction machine. Dried compressed air generated by the air supply system is used for a pneumatic system such as a brake system (brake device) or a suspension system (suspension device).

<Air supply system 10>

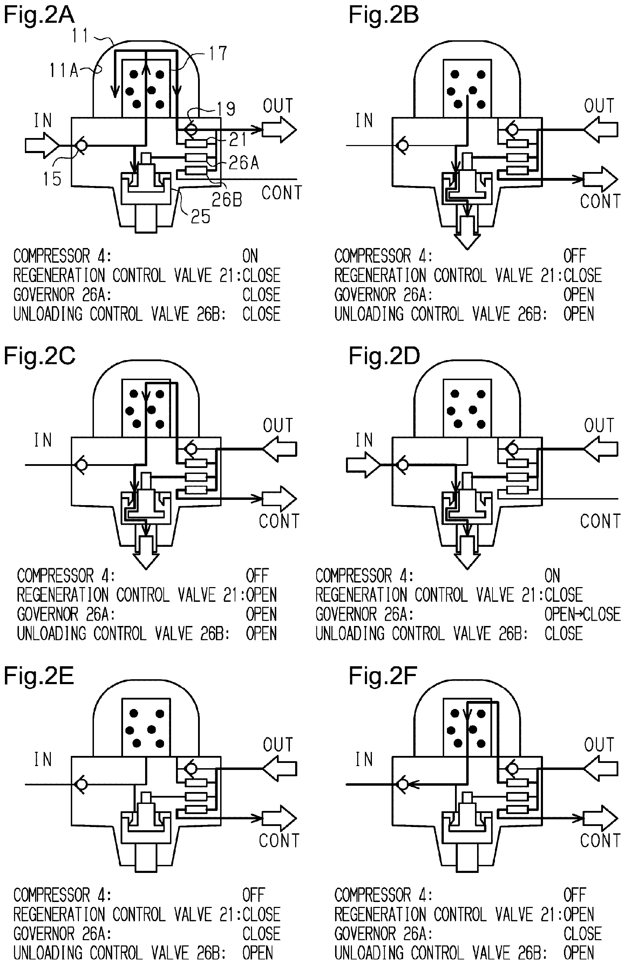

An air supply system 10 will now be described with reference to Figure 1. The air supply system 10 includes a compressor 4, an air drying circuit 11, and an ECU 80 (Electronic Control Unit) that serves as a control device.
The ECU 80 is connected to the air drying circuit 11 through a plurality of wirings E61 to E67. The ECU 80 includes an arithmetic portion, a communication interface portion, a volatile storage portion, and a nonvolatile storage portion. The arithmetic portion is a computer processor, and is configured to control the air drying circuit 11 according to an air supply program stored in the nonvolatile storage portion (storage medium). At least a part of the processing to be executed by the arithmetic portion may be realized by a circuit such as an ASIC. The air supply program may be executed by one computer processor, or may be executed by a plurality of computer processors. The ECU 80 also includes a storage portion 80A that stores information for determining the frequency of execution of each operation of the air drying circuit 11. The storage portion 80A is a nonvolatile storage portion or a volatile storage portion, and may be the same as or different from the storage portion in which the aforementioned control program is stored.
The ECU 80 is connected through an in-vehicle network such as a CAN (Controller Area Network) to other ECUs (not illustrated) mounted in the vehicle, for example, an engine ECU and a brake ECU. The ECU 80 acquires information indicating a vehicle state from those ECUs. The information indicating the vehicle state includes, for example, information indicating whether the ignition switch is off, the vehicle speed, and information pertaining to driving of the engine.
The state of the compressor 4 is switched, based on an instruction from the ECU 80, between an operation state (load operation) in which the compressor 4 compresses air and supplies the compressed air and a non-operation state (idling operation) in which the compressor 4 does not compress air. The compressor 4 is operated by motive power transmitted from a rotary drive source such as an engine.
The air drying circuit 11 is a so-called "air dryer". The air drying circuit 11 is connected to the ECU 80, and moisture and the like included in compressed air sent from the compressor 4 during a load operation is removed from the compressed air by the air drying circuit 11. The air drying circuit 11 supplies the compressed air after drying (hereinafter, referred to as "dried compressed air") to a supply circuit 12. The dried compressed air supplied to the supply circuit 12 is stored in an air tank 30.
The dried compressed air stored in the air tank 30 is supplied to a pneumatic system such as a brake system installed in the vehicle. For example, in a case where the frequency at which the brakes are operated is high, such as when the vehicle travels on a downward slope or through an urban area, a consumed amount of the dried compressed air stored in the air tank 30 is large. In contrast, in a case where the frequency at which the brakes are operated is low, the consumed amount of the dried compressed air stored in the air tank 30 is small.
The air drying circuit 11 has a maintenance port P12. The maintenance port P12 is a port that is used for supplying air to the air drying circuit 11 when performing maintenance.
The air drying circuit 11 includes a filter 17 arranged inside a case 11A (see Figure 2A) or the like. The filter 17 is provided partway along an air supply passage 18 which connects the compressor 4 and the supply circuit 12. The filter 17 includes a desiccant. Further, in addition to the desiccant, the filter 17 include an oil trap portion which traps oil. The oil trap portion can be a material of any kind that can trap oil while allowing air to pass therethrough, such as a foam such as urethane foam, a metal material having a large number of air holes, or a glass fiber filter.
The filter 17 causes compressed air sent from the compressor 4 to pass through the desiccant to thereby remove moisture contained in the compressed air from the compressed air and thus dry the compressed air. Further, the oil trap portion traps oil contained in the compressed air to thereby clean the compressed air. The compressed air that passed through the filter 17 is supplied to the supply circuit 12 via a downstream check valve 19. When the filter 17 side is taken as upstream and the supply circuit 12 side is taken as downstream, the downstream check valve 19 only permits a flow of air from upstream to downstream. Note that, the downstream check valve 19 has a predetermined valve opening pressure (sealing pressure), and therefore when compressed air flows, the upstream pressure is higher than the downstream pressure by an amount corresponding to the valve opening pressure.

Further, on the downstream side of the filter 17, a bypass channel 20 as a bypass for bypassing the downstream check valve 19 is provided in parallel with the downstream check valve 19. A regeneration control valve 21 is provided in the bypass channel 20.

The regeneration control valve 21 is an electromagnetic valve that is controlled by the ECU 80. The ECU 80 switches operations of the regeneration control valve 21 by controlling to switch the power of the regeneration control valve 21 on and off (driving/non-driving) via the wiring E64. The regeneration control valve 21 is closed in a state in which the power is off and thereby seals the bypass channel 20, and is opened in a state in which the power is on and thereby opens the bypass channel 20. The ECU 80 receives, for example, the value of the air pressure inside the air tank 30, and actuates the regeneration control valve 21 when the value of the air pressure exceeds a predetermined range.

In the bypass channel 20, an orifice 22 is provided between the regeneration control valve 21 and the filter 17. When the regeneration control valve 21 is energized, dried compressed air on the supply circuit 12 side is sent to the filter 17 via the bypass channel 20 in a state in which the flow rate is regulated by the orifice 22. The dried compressed air sent to the filter 17 flows back from downstream of the filter 17 toward upstream thereof so as to pass through the filter 17. Such a process is an operation that regenerates the filter 17 and is referred to as a "regeneration operation" of the air drying circuit 11. At such time, because the dried compressed air sent to the filter 17 is dried and cleaned air that has passed through the filter 17 and the like from the air supply passage 18 and supplied to the supply circuit 12, the dried compressed air can remove moisture and oil trapped in the filter 17 from the filter 17. In normal control, the ECU 80 opens the regeneration control valve 21 when the pressure inside the air tank 30 reaches an upper limit value (cut-out pressure). On the other hand, when the pressure inside the air tank 30 reaches a lower limit value (cut-in pressure), the ECU 80 closes the regeneration control valve 21 that has been opened.

A branch passage 16 branches from a section between the compressor 4 and the filter 17. A drainage discharge valve 25 is provided in the branch passage 16, and a drainage discharge port 27 is connected to the end of the branch passage 16.

Drainage that is a fluid containing moisture and oil removed from the filter 17 is sent together with compressed air to the drainage discharge valve 25. The drainage discharge valve 25 is a pneumatically driven valve that is driven by air pressure, and is provided between the filter 17 and the drainage discharge port 27, in the branch passage 16. The drainage discharge valve 25 is a two-port, two-position valve that changes positions between a closed position and an open position. When in the open position, the drainage discharge valve 25 sends drainage to the drainage discharge port 27. The drainage discharged from the drainage discharge port 27 may be collected by an oil separator (not shown). Note that, the drainage corresponds to a fluid that passes through the filter 17 in the reverse direction.

The drainage discharge valve 25 is controlled by a governor 26A. The governor 26A is an electromagnetic valve that is controlled by the ECU 80. The ECU 80 switches operations of the governor 26A by controlling to switch the power of the governor 26A on and off (driving/non-driving) via the wiring E63. When the power of the governor 26A is switched on, the governor 26A switches to an input position in which the governor 26A inputs an air pressure signal to the drainage discharge valve 25 to open the drainage discharge valve 25. Further, when the power of the governor 26A is switched off, the governor 26A switches to an open position in which the governor 26A does not input an air pressure signal to the drainage discharge valve 25 and opens a port of the drainage discharge valve 25 to the atmospheric pressure to cause the drainage discharge valve 25 to close.

In a state in which an air pressure signal is not being input from the governor 26A, the drainage discharge valve 25 is maintained in the closed position in which the branch passage 16 is closed, and upon an air pressure signal being input from the governor 26A, the drainage discharge valve 25 switches to the open position in which the branch passage 16 is opened. Further, if the pressure of an input port connected to the compressor 4 in the drainage discharge valve 25 exceeds an upper limit value, the drainage discharge valve 25 is forcedly switched to the open position.

An upstream check valve 15 is provided between the compressor 4 and the filter 17 and between the compressor 4 and the branch passage 16. When the compressor 4 side is referred to as "upstream" and the filter 17 side is referred to as "downstream", the upstream check valve 15 permits only the flow of air from the upstream side toward the downstream side. The upstream check valve 15 has a predetermined valve opening pressure (sealing pressure). Therefore, when compressed airflows, the upstream pressure becomes higher than the downstream pressure by an amount corresponding to the valve opening pressure. Note that, upstream of the upstream check valve 15, a reed valve is provided in the outlet of the compressor 4. The branch passage 16 and the filter 17 are provided downstream of the upstream check valve 15.

The compressor 4 is controlled by an unloading control valve 26B. The unloading control valve 26B is an electromagnetic valve that is controlled by the ECU 80. The ECU 80 switches operations of the unloading control valve 26B by controlling to switch the power of the unloading control valve 26B on and off (driving/non-driving) via the wiring E62. When the power of the unloading control valve 26B is switched off, the unloading control valve 26B switches to an open position to open a channel between the unloading control valve 26B and the compressor 4 to the atmosphere. Further, when the power of the unloading control valve 26B is switched on, the unloading control valve 26B switches to a supply position and sends an air pressure signal composed of compressed air to the compressor 4.

A state of the compressor 4 switches to a non-operation state (idling operation) upon the air pressure signal being input from the unloading control valve 26B. For example, when the pressure in the air tank 30 has reached the cut-out pressure, a supply of dried compressed air is not required. When the pressure on the supply circuit 12 side reaches the cut-out pressure and the ECU 80 switches on the power of the unloading control valve 26B (drives the unloading control valve 26B), the unloading control valve 26B switches to the supply position. By this means, an air pressure signal is supplied to the compressor 4 from the unloading control valve 26B, and the state of the compressor 4 switches to a non-operation state.

A pressure sensor 50 is provided between the compressor 4 and the upstream check valve 15. The pressure sensor 50 is connected to the air supply passage 18, and measures the air pressure in the air supply passage 18 and transmits the measured result to the ECU 80 through the wiring E61.

A humidity sensor 51 and a temperature sensor 52 are provided between the downstream check valve 19 and the supply circuit 12. The humidity sensor 51 may detect absolute humidity or relative humidity. The humidity sensor 51 and the temperature sensor 52 measure the humidity and the temperature of the compressed air on the downstream side of the filter 17, and output the measurement results to the ECU 80 through the wiring E65 and E66, respectively. The ECU 80 determines the state of wetness of the dried compressed air based on the humidity and the temperature input from the humidity sensor 51 and the temperature sensor 52.

Further, a pressure sensor 53 is provided between the downstream check valve 19 and the supply circuit 12. The pressure sensor 53 is provided to be able to detect the air pressure in the air tank 30, and outputs the detected pressure value to the ECU 80 through the wiring E67. The pressure between the downstream check valve 19 and the supply circuit 12 is the same as the pressure in the air tank 30, and the detection result of the pressure sensor 53 can be used as the value of the pressure in the air tank 30. Note that, the pressure sensor 53 may be provided in the supply circuit 12 or may be provided in the air tank 30.

<Description of operations of air drying circuit 11>

As illustrated in Figures 2A to 2F, the air drying circuit 11 has a plurality of operation modes which include at least a first operation mode to a sixth operation mode.

(First operation mode)

As illustrated in Figure 2A, the first operation mode is a mode in which a normal dehumidification operation (loading operation) is performed. In the first operation mode, the regeneration control valve 21 and the unloading control valve 26B are each closed (described as "CLOSE" in the drawing), and the governor 26A is set in the open position in which no air pressure signal is input to the compressor 4 (described as "CLOSE" in the drawing). At this time, power is not supplied to the regeneration control valve 21, the governor 26A, and the unloading control valve 26B. Further, the governor 26A and the unloading control valve 26B open ports of the compressor 4 and the drainage discharge valve 25, which are connected to the downstream side of the governor 26A and the unloading control valve 26B, to the atmosphere, respectively.. In the first operation mode, when compressed air is being supplied from the compressor 4 (described as "ON" in the drawing), moisture and the like is removed at the filter 17, and the compressed air is supplied to the supply circuit 12.

(Second operation mode)

As illustrated in Figure 2B, the second operation mode is a mode for performing a purge operation that causes dried compressed air inside the air drying circuit 11 to pass through the filter 17 to clear the filter 17. In the second operation mode, the regeneration control valve 21 is closed, the unloading control valve 26B is set in the supply position (described as "OPEN" in the drawing), and the governor 26A is set in the input position (described as "OPEN" in the drawing). At such time, power is supplied to each of the governor 26A and the unloading control valve 26B, and the ports of the compressor 4 and the drainage discharge valve 25, which are connected to the downstream side of the governor 26A and the unloading control valve 26B, are each connected to the upstream side (supply circuit 12 side). By this means, the compressor 4 switches to a non-operation state (described as "OFF" in the drawing), and the drainage discharge valve 25 is opened. As a result, dried compressed air present between the downstream check valve 19 and the filter 17 flows (flows back) through the filter 17 in the reverse direction to the direction of the flow of air in the first operation mode (dehumidification mode), and moisture and the like trapped by the filter 17 is discharged from the drainage discharge port 27 as drainage. Further, the air pressure of the filter 17 and the air supply passage 18 is released to the atmospheric pressure.

(Third operation mode)

As illustrated in Figure 2C, the third operation mode is a mode for performing a regeneration operation that regenerates the filter 17. In the third operation mode, the regeneration control valve 21 is opened, the governor 26A is set in the input position, and the unloading control valve 26B is set in the supply position (each described as "OPEN" in the drawing). At this time, in addition to the governor 26A and the unloading control valve 26B, power is also supplied to the regeneration control valve 21. In the third operation mode, the compressor 4 is placed in a non-operation state, and dried compressed air in the supply circuit 12 or stored in the air tank 30 is caused to flow back through the filter 17, and is discharged from the drainage discharge port 27. By this means, moisture and the like trapped in the filter 17 is removed. Whilst the second operation mode and the third operation mode are each a mode that clears the filter 17, the third operation mode differs from the second operation mode at least in the respect that the regeneration control valve 21 is opened. By this means, in the third operation mode, dried compressed air inside the air tank 30 can be caused to pass through the filter 17 via the supply circuit 12 and the bypass channel 20. Therefore, an effect of clearing the filter 17 is greater than in the second operation mode. Further, in the third operation mode also, the air pressure of the filter 17 and the air supply passage 18 is released to the atmospheric pressure.

(Fourth operation mode)

As illustrated in Figure 2D, the fourth operation mode is a mode in which an oil cut operation is performed. In the fourth operation mode, air containing an excessive amount of oil sent from the compressor 4 is discharged from the drainage discharge port 27 without passing through the filter 17 while the compressor 4 is operating. When the compressor 4 is in the non-operation state, oil may store in the compression chamber of the compressor 4. If the state of the compressor 4 is switched to the operation state in a state in which oil has stored inside the compression chamber, the amount of oil contained in the compressed air sent from the compression chamber increases. If oil adheres to the desiccant, the dehumidification performance of the desiccant deteriorates. To avoid this, the oil cut operation is executed to discharge the compressed air containing an excessive amount of oil. In the fourth operation mode, the regeneration control valve 21 is closed, the unloading control valve 26B is set in the open position (described as "CLOSE" in the drawing), and the governor 26A is driven for a time period and then set in the open position (described as "CLOSE" in the drawing). In this way, even if compressed air containing a relatively large amount of oil is sent from the compressor 4, the compressed air can be prevented from passing through the filter 17 and discharged from the drainage discharge port 27. Therefore, a deterioration of the dehumidification performance of the filter 17 immediately after the compressor 4 is switched from the non-operation state to the operation state can be prevented. The oil cut operation can also be performed when a rotational speed of the engine increases in the operation state and when the oil content from the compressor 4 increases when there is a high load on the engine or the like.

(Fifth operation mode)

As illustrated in Figure 2E, the fifth operation mode is a mode for performing a compressor stop operation without purging. In the fifth operation mode, the regeneration control valve 21 is closed, the governor 26A is set in the open position (described as "CLOSE" in the drawing), and the unloading control valve 26B is set in the supply position (described as "OPEN" in the drawing). In the fifth operation mode, when the compressor 4 is in a non-operation state, the air pressure is maintained by not allowing compressed air or dried compressed air remaining in the air supply passage 18 or the desiccant of the filter 17 to be discharged from the drainage discharge port 27.

(Sixth operation mode)

As illustrated in Figure 2F, the sixth operation mode is a mode in which an assist operation is performed for a pressurization process. In the sixth operation mode, the regeneration control valve 21 is opened, the unloading control valve 26B is set in the supply position (described as "OPEN" in the drawing), and the governor 26A is set in the open position (described as "CLOSE" in the drawing). In the sixth operation mode, when the compressor 4 is in a non-operation state, by supplying compressed air in the supply circuit 12 (causing the compressed air to flow back) to the air supply passage 18 and into the desiccant of the filter 17, the pressure of the air supply passage 18 and the filter 17 is made higher than the atmospheric pressure to thereby maintain the back pressure (air pressure) of the upstream check valve 15 at a pressure that is higher than the atmospheric pressure.

<Setting of conditions for executing operation modes>

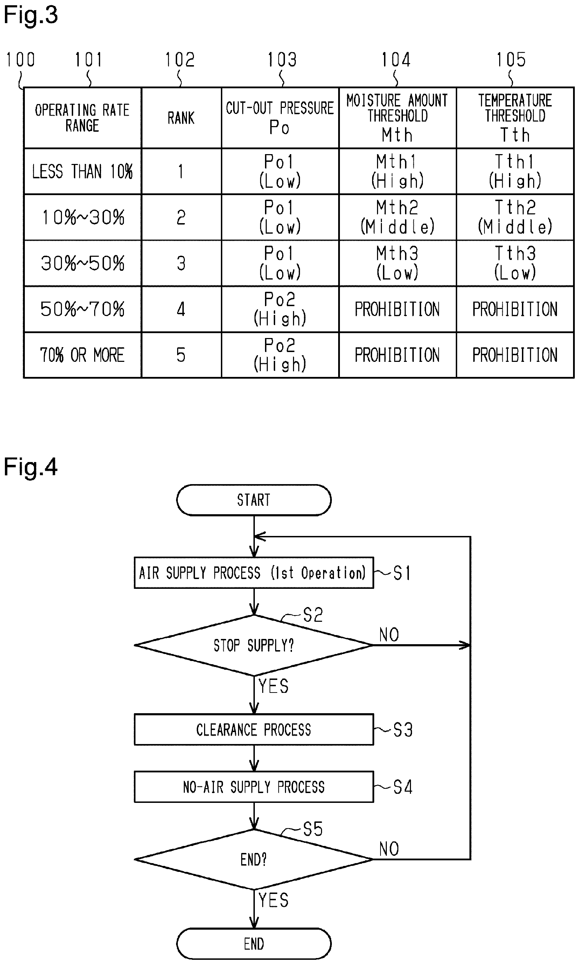

Next, with reference to Figure 3 and Figure 4, conditions for executing the purge operation (second operation mode), the regeneration operation (third operation mode), and the oil cut operation (fourth operation mode) will be described. Although the purge operation and the oil cut operation properly maintains the dehumidification performance of the filter 17, the purge operation and the oil cut operation consume the dried compressed air in the air drying circuit 11 or the compressed air sent from the compressor 4 and therefore increase the operation load on the compressor 4. The compressor 4 uses a rotational force transmitted from a rotational drive source, such as an engine, to generate compressed air, and therefore an increase of the operating load on the compressor 4 leads to an increase of the load on the rotational drive source and thus to an increase of the amount of energy, such as fuel, consumed by the vehicle.

On the other hand, the regeneration operation, which is performed in order to properly maintain the clearance performance of the filter 17 as with the purge operation and the oil cut operation, differs from the purge operation and the oil cut operation in that the regeneration operation consumes the dried compressed air in the air tank 30. The consumption of the dried compressed air not only results in an increase of the operating load on the compressor 4 but can also lead to insufficient dried compressed air in the air tank 30. That is, if the regeneration operation is performed in a traveling situation in which the amount of consumption of the dried compressed air in the air tank 30 is high, such as a traveling situation in which the frequency of activation of the brake is high, the dried compressed air is consumed not only by the pneumatic system, such as the brake system, but also by the regeneration operation, so that the consumed amount of the dried compressed air in the air tank 30 increases.

In view of this, by setting conditions for executing the regeneration operation, the purge operation, and the oil cut operation and thereby optimizing the frequency of execution of these operations, the consumed amount of the compressed air and the dried compressed air is optimized.

First, a condition for executing the purge operation will be described. The purge operation is preferably executed when the amount of moisture trapped and held by the filter 17 increases. When the amount of moisture trapped by the filter 17 increases, and the trapped amount of moisture exceeds a moisture trapping capacity of the filter 17, the state of wetness of the dried compressed air having passed through the filter 17 is inevitably a state of high wetness. Therefore, whether execution of the purge operation is required or not is determined based on the comparison between an indicator of the state of wetness of the dried compressed air and a threshold thereof. In this embodiment, as the indicator of the state of wetness of the dried compressed air, the amount of moisture (hereinafter, referred to as a contained moisture amount) contained in the dried compressed air supplied to the air tank 30 in a time period is used. The contained moisture amount of the dried compressed air can be estimated from the amount of air sent from the compressor 4 (discharge amount), the humidity detected by the humidity sensor 51 in the regeneration operation or the like.

On the other hand, whether the amount of moisture trapped by the filter 17 is gradually or rapidly increasing cannot be estimated from the state of wetness of the dried compressed air having passed through the filter 17. The rate of the increase of the amount of moisture trapped by the filter 17 depends on the amount of compressed air sent from the compressor 4 and the state of wetness of the compressed air. The amount of compressed air increases as the operating rate of the compressor 4 increases. On the other hand, as the temperature of the compressed air increases, the saturated water vapor amount (saturated water vapor pressure) of the compressed air tends to increase, and the amount of water vapor contained in the compressed air tends to increase. The temperature of compressed air increases because of compression of air by the compressor 4 or the like, and therefore increase as the operating rate of the compressor 4 increases. In view of this, in this embodiment, the threshold of the contained moisture amount for starting the purge operation is set according to an operating rate R of the compressor 4, thereby optimizing the frequency of execution of the purge operation.

As illustrated in Figure 3, the ECU 80 stores start threshold information 100 in the storage portion 80A. The start threshold information 100 includes ranges 101 of the operating rate R of the compressor 4, a rank 102 associated with each of the ranges 101 of the operating rate R, a cut-out pressure 103, a moisture amount threshold 104, and a temperature threshold 105. The rank 102 indicates a state mode of the air drying circuit 11 and is set according to the range of the operating rate R of the compressor 4. Although the start threshold information 100 associates each range with thresholds, the start threshold information 100 can be any information that allows determination of a start threshold from the operating rate R of the compressor 4 and is not limited to a particular form. For example, the start threshold information 100 may be a map in which an axis for the operating rate R, an axis for the cut-out pressure, an axis for the moisture amount threshold, and an axis for the temperature threshold are associated with each other, and a start threshold for each operation is set.

In the start threshold information 100, the higher the operating rate R of the compressor 4, the lower a moisture amount threshold Mth of the contained moisture amount that is a reference for starting the purge operation is set. As a result, the purge operation is more likely to be executed when the operating rate R of the compressor 4 is high, and therefore, the frequency of execution of the purge operation can be increased under a fixed condition. However, the purge operation is prohibited when the operating rate R of the compressor is equal to or greater than a predetermined value, and a value for the prohibition is set for the moisture amount threshold Mth. More specifically, a moisture amount threshold Mth1 is set as a threshold of the contained moisture amount for an operating rate R less than 10%, and a moisture amount threshold Mth2 (< Mth1) is set for an operating rate R equal to or greater than 10% and less than 30%.

Further, a moisture amount threshold Mth3 (< threshold Mth2) is set for an operating rate R equal to or greater than 30% and less than 50%. That is, for an operating rate R less than 50%, the moisture amount threshold Mth1 (High) as a high value, the moisture amount threshold Mth2 (Middle) as a moderate value, and the moisture amount threshold Mth3 (Low) as a low value are set in ascending order of the operating rate R. When the operating rate R is equal to or greater than 50%, the purge operation is prohibited.

On the other hand, when the operating rate R is equal to or greater than the predetermined value (such as 50%), the vehicle is estimated to be in a traveling condition in which the consumed amount of dried compressed air is great. During transition of the operation mode, the dried compressed air cannot be supplied from the air drying circuit 11 to the air tank 30. Therefore, if the operation mode of the air drying circuit 11 is switched from the dehumidification operation (first operation mode) to the purge operation (second operation mode) under such a condition, the amount of dried compressed air stored in the air tank 30 can be insufficient. Therefore, when the operating rate R is equal to or greater than the predetermined value, a higher priority can be given to supplying dried compressed air to the pneumatic system, and the purge operation is not performed.

Next, a condition for executing the oil cut operation will be described. Immediately after the air drying circuit 11 is switched from the non-operation state to the operation state, the compressed air sent from the compressor 4 may contain a large amount of oil, and the oil may pass through a channel (charge line) between the compressor 4 and the filter 17 of the air supply passage 18 and adhere to the filter 17. If the state in which oils has adhered to the filter 17 is maintained, the amount of moisture trapped by the desiccant decreases, and the desiccant deteriorates relatively early. Therefore, in order to reduce the load on the filter 17, the oil cut operation is preferably executed immediately after the air drying circuit 11 is switched from the non-operation state to the operation state. The amount of oil contained in the compressed air is great when the temperature of the compressed air is high, so that whether to execute the oil cut operation or not is determined based on the comparison between the temperature detected by the temperature sensor 52 and a threshold thereof. Further, the amount of oil increases as the operating rate of the compressor 4 increases, so that the temperature threshold of the dried compressed air is set according to the operating rate R of the compressor 4, thereby optimizing the frequency of execution of the oil cut operation.

As illustrated in Figure 3, in the start threshold information 100, the higher the operating rate R of the compressor 4, the lower the temperature threshold Tth is set. However, the oil cut operation is prohibited when the operating rate R of the compressor is equal to or greater than a predetermined value, and a value for the prohibition is set for the temperature threshold Tth. More specifically, a temperature threshold Tth1 is set for an operating rate R less than 10%, and a temperature threshold Tth2 (< Tth1) is set for an operating rate R equal to or greater than 10% and less than 30%. Further, a temperature threshold Tth3 (< threshold Tth2) is set for an operating rate R equal to or greater than 30% and less than 50%. That is, for an operating rate R less than 50%, the temperature threshold Tth1 (High) as a high value, the temperature threshold Thh2 (Middle) as a moderate value, and the temperature threshold Tth3 (Low) as a low value are set in ascending order of the operating rate R. When the operating rate R is equal to or greater than 50%, the oil cut operation is prohibited.

Reasons why the temperature threshold Tth is set to be lower as the operating rate R becomes higher will be described. First, it is estimated that, as the operating rate R of the compressor 4 increases, the amount of air sent from the compressor 4 increases, so that the amount of air passing through the filter 17 increases, and accordingly, the amount of oil trapped by the filter 17 also tends to increase. Second, an increase of the temperature of the compressed air is a cause of an increase of the amount of oil contained in the compressed air. Therefore, by changing the temperature threshold Tth for starting the oil cut operation according to the operating rate R and thereby optimizing the frequency of execution of the oil cut operation, the load on the filter 17 is reduced. When the operating rate R of the compressor 4 is high, the frequency of execution of the oil cut operation is increased to reduce the amount of oil held by the filter 17, and when the frequency of operation of the compressor 4 is low, the frequency of execution of the oil cut operation is decreased to reduce the amount of compressed air consumed by the oil cut operation. The reason for prohibiting the oil cut operation when the operating rate R is equal to or greater than a predetermined value is the same as in the case of the purge operation.

Next, a start threshold of the regeneration operation will be described. The regeneration operation is executed on a premise that the pressure in the air tank 30 is equal to or higher than a cut-out pressure Po, which is a threshold thereof. The regeneration operation is started when the pressure in the air tank 30 is equal to or higher than the cut-out pressure Po, and the amount of moisture in the air tank 30 is equal to or greater than a threshold thereof. Therefore, by changing the cut-out pressure Po according to the operating rate R of the compressor 4, the frequency of execution of the regeneration operation is optimized.

As illustrated in Figure 3, in the start threshold information 100, the higher the operating rate R of the compressor 4, the higher the cut-out pressure Po is set. More specifically, a cut-out pressure Po1 (Low) that is a relatively low value is set for an operating rate R less than 50%, and a cut-out pressure Po2 (High) that is a relatively high value is set for an operating rate R equal to or greater than 50% (Po2 > Po1). Although the start threshold information 100 illustrated in Figure 3 includes two settings of the cut-out pressure, the start threshold information 100 may include three or more settings of the cut-out pressure.

A reason why the higher the operating rate R, the higher the cut-out pressure Po is set will be described. For example, when the operating rate R is low, such as when the operating rate R is less than 50%, it is estimated that the situation is that the amount of dried compressed air consumed by the pneumatic system, such as the brake system, is relatively small. In such a situation, the cut-out pressure Po is set to be a relatively low value to relatively increase the frequency of execution of the regeneration operation, thereby increasing the frequency of clearance of the filter 17. On the other hand, when the operating rate R is high, such as when the operating rate R is equal to or higher than 50%, it is estimated that the situation is that the amount of dried compressed air consumed by the pneumatic system, such as the brake system, is relatively great. In such a situation, the cut-out pressure is set to be a relatively high value to relatively decrease the frequency of execution of the regeneration operation, thereby giving a high priority to supplying dried compressed air to the pneumatic system.

(Control of air drying circuit 11)

Next, with reference to Figure 4 to Figure 7, a procedure in which the ECU 80 controls the air drying circuit 11 will be described.

As illustrated in Figure 4, the ECU 80 performs an air supply process of supplying compressed air output from the compressor 4 to the supply circuit 12 (step S1). For example, the air supply process is started on a predetermined condition, such as when the engine is driven. Alternatively, the air supply process may be started when the pressure in the air tank 30 has reached a predetermined pressure, such as a cut-in pressure, which is a lower limit value, for example. In the supply process, the air drying circuit 11 is in the first operation mode.

When the air supply process is started, the ECU 80 determines whether to stop the supply of air or not (step S2). More specifically, the ECU 680 acquires the pressure in the air tank 30 detected by the pressure sensor 53, and determines whether or not the pressure has reached the cut-out pressure. If the ECU 80 determines that the pressure in the air tank 30 has not reached the cut-out pressure (step S2: NO), the ECU 80 returns the processing to the air supply process (step S1).

If the ECU 80 determines that the pressure in the air tank 30 has reached the cut-out pressure (step S2: YES), the ECU 80 ends the air supply process, brings the compressor 4 into the non-operation state, and executes a clearance process of performing the regeneration operation or the like (step S3).

When the clearance process (step S3) ends, the ECU 80 performs a no-air supply process (step S4). In the no-air supply process, air pressure is adjusted so that the back pressure of the upstream check valve 15 is maintained to be high when the compressor 4 is in the non-operation state. For example, in the no-air supply process, air pressure is adjusted by executing at least one of the second operation mode, the fifth operation mode, and the sixth operation mode one or more times. When the adjustment of air pressure ends, the ECU 80 determines whether to end the air supply or not based on the state of the vehicle (step S5). The end of the air supply is determined based on the state of the vehicle, such as a stop of the engine of the vehicle.

If the ECU 80 determines not to end the air supply (step S5: NO), the ECU 80 returns the processing to step S1 and executes the air supply process (step S1) and the subsequent processing. On the other hand, if the ECU 80 determines to end the air supply (step S5: YES), the ECU 80 stops the supply of air.

The ECU 80 defines a period from the time of end of the regeneration operation to the time of start of the subsequent regeneration operation as one cycle. At the time of start of a cycle, the rank, which indicates the state mode of the air drying circuit 11, is determined based on the operating rate R of the compressor 4, and start thresholds of the cut-out pressure, the moisture amount threshold, the temperature threshold and the like are set according to the rank.

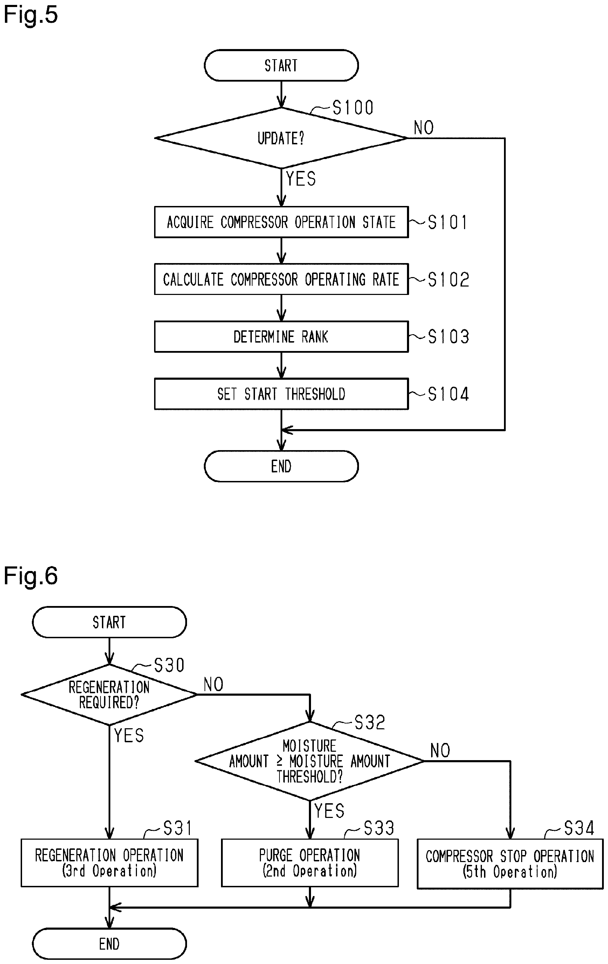

With reference to Figure 5, setting of start thresholds will be described. The ECU 80 determines whether to update start thresholds or not (step S100). For example, the ECU 80 determines whether or not a new cycle has been started. If the ECU 80 determines that a new cycle has not been started, and start thresholds need not be updated (step S100: NO), the ECU 80 ends the processing. The update of start thresholds may be performed at another timing. For example, the update of start thresholds may be performed at shorter time intervals than an average duration of the cycle described above, performed at the time of end of one cycle, or performed between the time of start and the time of end of one cycle.

If the ECU 80 determines to update start thresholds (step S100: YES), the ECU 80 acquires a compressor operation state (operation information) (step S101). In this embodiment, the compressor operation state includes an operation time (load time) and a non-operation time (unload time) of the compressor 4 in one cycle. The ECU 80 defines the dehumidification operation (first operation mode) as a load operation, and defines the purge operation (second operation mode), the regeneration operation (third operation mode), the oil cut operation (fourth operation mode), the compressor stop operation without purging (fifth operation mode), and the compressor assist operation (sixth operation mode) as an unload operation. Provided that the time for which the load operation is executed is referred to as a load time T1, and the time for which the unload operation is executed is referred to as an unload time T2, the ECU 80 stores the load time T1 and the unload time T2 in the storage portion 80A, and updates the times at a predetermined timing.

The ECU 80 then calculates the operating rate of the compressor 4 based on the operation state of the compressor 4 (step S102). The operating rate is calculated as a ratio of the load time T1 to the sum of the load time T1 and the unload time T2 in accordance with the following equation (1).

$$\text{Operating rate R} = (\text{load time T1})/(\text{load time T1} + \text{unload time T2})...(1)$$

The ECU 80 then determines the rank of the air drying circuit 11 based on the operating rate of the compressor 4 by referring to the start threshold information 100 (step S103). For example, when the operating rate of the compressor 4 is less than 10%, "1" is set as the rank.

Upon setting the rank, the ECU 80 sets start thresholds of the cut-out pressure, the moisture amount threshold, and the temperature threshold according to the rank by referring to the start threshold information 100 (step S104). When the rank is "1", the "cut-out pressure Po1" is set as the cut-out pressure, the "moisture amount threshold Mth1" is set as the moisture amount threshold, and the "temperature threshold Tth1" is set as the temperature threshold. These start thresholds are retained until the next cycle, and updated when the next cycle is started.

(Clearance process)

With reference to Figure 6, details of the clearance process (step S3) will be described. As described above, the clearance process is started when the pressure in the air tank 30 is equal to or higher than the cut-out pressure. The cut-out pressure referred to here is a cut-out pressure having been updated based on the operating rate of the compressor 4. That is, even when the operating rate of the compressor 4 is high, if the pressure in the air tank 30 has reached the cut-out pressure, which is set to be relatively high, the clearance process is performed on the assumption that sufficient dried compressed air is stored in the air tank 30.

The ECU 80 determines whether or not the regeneration operation for the filter 17 is required (step S30). Although the condition for determining the necessity is not particularly limited, the ECU 80 may estimate the contained moisture amount of the dried compressed air on the side of the supply circuit 12 based on at least one of the humidity and the temperature on the side of the supply circuit 12, and determine that the regeneration is required when the contained moisture amount tends to be great, for example. For example, the ECU 80 may estimate the amount of moisture contained in the dried compressed air in the air tank 30 (hereinafter, referred to as an in-tank moisture amount) based on the humidity detected by the humidity sensor 51 or the like, and determine that the regeneration is required when the moisture amount is equal to or greater than a threshold. The in-tank moisture amount is updated every predetermined time period, such as every one cycle. As an example, an in-tank moisture amount Mtk can be calculated from a temperature Tmp detected by the temperature sensor 52, the saturated water vapor pressure at the temperature Tmp, a humidity Hmd detected by the humidity sensor 51, and the capacity of the air tank 30.

If the ECU 80 determines that the in-tank moisture amount Mtk is equal to or greater than the threshold, and the regeneration operation is required (step S30: YES), for example, the ECU 80 switches the air drying circuit 11 to the third operation mode, and performs the regeneration operation (step S31). The regeneration operation ends when an end condition, such as that the pressure in the air tank 30 reaches the cut-in pressure or that a fixed time has elapsed, is established. Upon ending of the regeneration operation, the clearance process (step S3) ends, and the processing proceeds to the next step.

On the other hand, when the ECU 80 determines in step S30 that regeneration of the filter 17 is not required (step S30: NO), the ECU 80 determines whether or not the contained moisture amount of the dried compressed air is equal to or greater than the moisture amount threshold Mth (step S32). The moisture amount threshold Mth used in this step is a moisture amount threshold having been updated based on the operation state of the compressor 4.

When the ECU 80 determines that the contained moisture amount is equal to or greater than the moisture amount threshold Mth (step S32: YES), the ECU 80 switches the air drying circuit 11 to the second operation mode, and performs the purge operation (step S33). When the operating rate of the compressor 4 is low, the moisture amount threshold Mth is set to be relatively high, and therefore, the frequency of execution of the purge operation is low in the situation in which the pressure in the air tank 30 has reached the cut-out pressure. When the operating rate of the compressor 4 is high, the moisture amount threshold Mth is set to be low, and therefore, the frequency of execution of the purge operation is high in the situation in which the pressure in the air tank 30 has reached the cut-out pressure. When the operating rate R of the compressor 4 is equal to or higher than a predetermined value, the moisture amount threshold Mth set for prohibition is used, and therefore, the purge operation is not executed.

On the other hand, when the ECU 80 determines that the contained moisture amount is less than the moisture amount threshold Mth (step S32: NO), the ECU 80 switches the air drying circuit 11 to the fifth operation mode, and performs the compressor stop operation (step S34).

(Control of oil cut operation)

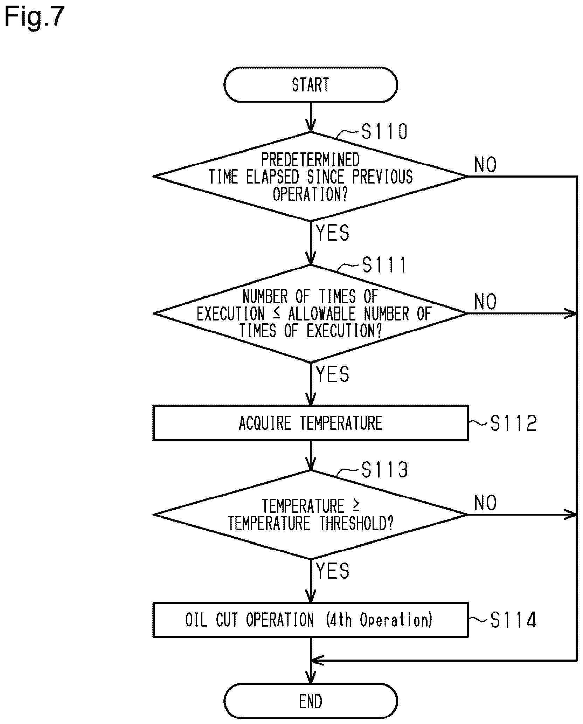

Next, with reference to Figure 7, a control performed by the ECU 80 to make the air drying circuit 11 execute the oil cut operation will be described. The oil cut operation is executed as a processing different from the clearance process (step S3).

As a premise, the ECU 80 has stored the elapsed time since the point of time at which the previous oil cut operation ended in the storage portion 80A or the like. Further, the ECU 80 has stored the number of times of execution of the oil cut operation in the storage portion 80A or the like, and updates the number of times in one cycle or in another time period. The number of times of execution may be reset at a predetermined timing, such as when a time period has elapsed, when the ignition switch of the vehicle is turned off, or when maintenance is executed.

The ECU 80 acquires the elapsed time since the point of time when the previous oil cut operation ended from the storage portion 80A or the like, and determines whether or not a time period has elapsed since the previous oil cut operation by comparing the elapsed time with a preset fixed time (step S110). When the ECU 80 determines that the time period has not elapsed since the previous oil cut operation (step S110: NO), the ECU 80 ends the processing.

When the ECU 80 determines that the time period has elapsed since the previous oil cut operation (step S110: YES), the ECU 80 determines whether or not the number of times of execution of the oil cut operation is equal to or smaller than a previously determined allowable number of times of execution (step S111). When the ECU 80 determines that the number of times of execution of the oil cut operation has exceeded the allowable number of times of execution (step S111: NO), the cu 80 ends the processing. On the other hand, when the ECU 80 determines that the number of times of execution of the oil cut operation is equal to or smaller than the allowable number of times of execution (step S111: YES), the ECU 80 acquires the temperature detected by the temperature sensor 52 (step S112).

The ECU 80 determines whether or not the acquired temperature is equal to or higher than the temperature threshold Tth (step S113). The temperature threshold Tth used here is a temperature threshold set according to the operating rate of the compressor 4. When the ECU 80 determines that the acquired temperature is equal to or higher than the temperature threshold Tth (step S113: YES), the ECU 80 switches the air drying circuit 11 to the fourth operation mode, and performs the oil cut operation (step S114). When the operating rate of the compressor 4 is low, the temperature threshold Tth is set to be high, so that the frequency of execution of the oil cut operation is low. When the operating rate of the compressor 4 is high, the temperature threshold Tth is set to be low, so that the frequency of execution of the oil cut operation is high. When the operating rate R of the compressor 4 is equal to or higher than a predetermined value, the temperature threshold Tth set for prohibition is used, and therefore, the oil cut operation is not executed.

On the other hand, when the ECU 80 determines that the acquired temperature is less than the temperature threshold Tth (step S113: NO), the ECU 80 ends the processing.

As described above, according to the embodiment described above, the following advantageous effects are achieved.

(1) The ECU 80 of the air drying circuit 11 acquires operation information indicating the operation state of the compressor 4, and changes the frequencies of execution of the purge operation, the oil cut operation, and the regeneration operation based on the acquired operation information on the compressor 4. That is, if it is determined based on the operation state of the compressor that a higher priority needs to be given to supplying dried compressed air to the pneumatic system installed in the vehicle, the frequencies of execution of the purge operation, the oil cut operation, and the regeneration operation can be reduced. If the ECU 80 determines that clearance of the filter 17 needs to be performed in a situation in which the amount of dried compressed air to be supplied to the pneumatic system is ensured, the frequencies of execution of the purge operation, the oil cut operation, and the regeneration operation can be increased to clear the filter 17.

(2) In a situation in which the pressure in the air tank 30 has reached the cut-out pressure, that is, in a situation in which a sufficient amount of dried compressed air is stored in the air tank 30, when the operating rate of the compressor 4 is high, the frequency of execution of the purge operation is increased. When the operating rate of the compressor 4 is low, the frequency of execution of the purge operation is decreased. That is, when the operating rate of the compressor 4 is high, and as a result, the amount of air passing through the filter 17 in a time period is great, and the temperature of the compressed air sent from the compressor 4 is high, the frequency of clearance of the filter 17 can be increased. When the operating rate of the compressor 4 is low, and as a result, the amount of air passing through the filter 17 is small, and the temperature of the compressed air sent from the compressor 4 is low, the consumed amount of the dried compressed air can be reduced.

(3) Whether execution of the purge operation is required or not is determined based on whether the contained moisture amount of the dried compressed air is equal to or greater than the moisture amount threshold Mth. The moisture amount threshold Mth is set to be high when it is determined that the operating rate of the compressor 4 is low, and is set to be low when it is determined that the operating rate of the compressor 4 is high. Therefore, the purge operation can be performed by considering not only the state of wetness of the dried compressed air having passed through the filter 17 but also the state of wetness of the compressed air yet to pass through the filter 17. That is, even when compressed air in a state of high wetness is sent from the compressor 4, the filter 17 traps much moisture, and as a result, the dried compressed air having passed through the filter 17 is in a state of significantly low wetness, the purge operation is likely to be performed. Therefore, the frequency of execution of the purge operation can be optimized.

(4) In the start threshold information 100, a value for prohibition is set for the threshold for the purge operation and the threshold for the oil cut operation in the case where the operating rate of the compressor 4 is higher than a predetermined value. Therefore, in a situation in which the amount of dried compressed air consumed by the pneumatic system is great, the operation mode is not switched, so that the supply of the dried compressed air from the air drying circuit 11 to the air tank 30 can be stably continued.

(5) When the operating rate of the compressor 4 is high, the cut-out pressure is set to be high. By setting the cut-out pressure to be high in this way, the filter clearance operation including the purge operation and the regeneration operation can be performed after a sufficient amount of dried compressed air is stored in the air tank 30. Therefore, a higher priority can be given to supplying dried compressed air to the pneumatic system installed in the vehicle.

(6) Whether execution of the oil cut operation is required or not is determined based on whether or not the temperature of the dried compressed air is equal to or higher than the temperature threshold Tth. The temperature threshold Tth is set to be high when it is determined that the operating rate of the compressor 4 is low, and is set to be low when it is determined that the operating rate of the compressor 4 is high. Therefore, the frequency of execution of the oil cut operation can be decreased when the operating rate of the compressor 4 is low and therefore the temperature of the dried compressed air is low, and can be increased when the operating rate of the compressor 4 is high and therefore the temperature of the dried compressed air is high.

(7) As operation information on the compressor 4, operating rate based on the load time and the unload time is used. Since the load time and the unload time have an effect on the temperature of the compressed air generated by the compressor 4, the timings of performing the purge operation, the oil cut operation, and the regeneration operation can be properly determined by determining the operation state of the compressor 4 based on the load time and the unload time.

The embodiment described above can be modified and implemented as follows. This embodiment and the following modifications can be implemented in combination with each other within a range in which no technical contradiction occurs.

- In the embodiment described above, the condition for starting the purge operation is that the contained moisture amount of the dried compressed air supplied to the air tank 30 is equal to or greater than the moisture amount threshold on the premise that the pressure in the air tank 30 is equal to or higher than the cut-out pressure. However, instead of the contained moisture amount, any indicator indicating the state of wetness of the dried compressed air or the interior of the air tank 30 can be used. For example, the indicator may be the amount of moisture contained in a unit volume of the dried compressed air, the humidity detected by the humidity sensor 51 during the dehumidification operation, or the amount of moisture in the air tank 30. Whether to execute the purge operation or not may be determined based only on the state of wetness of the dried compressed air or the interior of the air tank 30, regardless of whether or not the pressure in the air tank 30 is equal to or higher than the cut-out pressure.

- In the embodiment described above, the condition for starting the regeneration operation is that the amount of moisture in the air tank 30 is equal to or greater than a threshold on the premise that the pressure in the air tank 30 is equal to or higher than the cut-out pressure. However, instead of the amount of moisture in the air tank 30, any indicator indicating the state of wetness of the dried compressed air or the interior of the air tank 30 can be used. For example, the indicator may be the amount of moisture contained in a unit volume of the dried compressed air, the humidity detected by the humidity sensor 51 during the dehumidification operation, or the contained moisture amount of the dried compressed air supplied to the air tank 30.

- In the embodiment described above, the conditions for starting the oil cut operation are that the elapsed time since the previous oil cut operation is equal to or greater than a fixed time, that the number of times of execution is equal to or smaller than an allowable number of times of execution, and that the temperature of the dried compressed air is equal to or lower than the temperature threshold. However, one or two of these conditions may suffice. Further, the conditions for stating the oil cut operation may additionally include a condition that the pressure in the air tank 30 is equal to or higher than the cut-out pressure. In the latter case, the oil cut operation is not performed when a sufficient amount of dried compressed air is stored in the air tank 30, and therefore, the consumption of the compressed air sent from the compressor 4 can be reduced, thereby giving a higher priority to supplying dried compressed air to the pneumatic system.

- In the embodiment described above, the frequency of execution of the oil cut operation is decreased by setting the temperature threshold to be high when the operating rate of the compressor 4 is low (such as less than 10%) and is increased by setting the temperature threshold to be low when the operating rate of the compressor 4 is high (such as equal to or higher than 30% and less than 50%). In addition to the oil cut operation and the purge operation, the frequency of execution of which is decreased by setting the moisture amount threshold to be high when the operating rate of the compressor 4 is low (such as less than 10%) and is increased by setting the moisture amount threshold to be low when the operating rate of the compressor 4 is high (such as equal to or higher than 30% and less than 50%), the frequency of execution of another operation can also be increased when the operating rate of the compressor 4 is low and be decreased when the operating rate is high. For example, as for with the regeneration operation, if a predetermined condition, such as that the consumed amount of the dried compressed air in the air tank 30 is decreased, is satisfied, the frequency of execution of the regeneration operation can also be decreased when the operating rate of the compressor 4 is low and be increased when the operating rate is high. Alternatively, the frequency of execution of any operation other than the purge operation, the oil cut operation, and the regeneration operation that is not the dehumidification operation and involves discharging air from the drainage discharge port 27 can be decreased when the operating rate of the compressor 4 is low and be increased when the operating rate is high.

- In the embodiment described above, for an operating rate of the compressor 4 equal to or higher than a predetermined value, a value for prohibition is set as a threshold, and the purge operation and the oil cut operation are prohibited. As a form other than this, a threshold may be set for all values (0% to 100%) of the operating rate of the compressor 4. In the latter case, again, the threshold may decrease as the operating rate of the compressor 4 increases. Alternatively, the threshold may decrease as the operating rate of the compressor 4 increases when the operating rate of the compressor 4 is less than a predetermined value, such as 50%, and may increase as the operating rate of the compressor 4 increases when the operating rate of the compressor 4 is equal to or higher than the predetermined value.

- In the embodiment described above, for an operating rate of the compressor 4 equal to or higher than a predetermined value, a value for prohibition is set as a threshold, and the purge operation and the oil cut operation are prohibited. As a form other than this, only the purge operation or only the oil cut operation may be prohibited when the operating rate of the compressor 4 is equal to or higher than a predetermined value. Alternatively, both the purge operation and the regeneration operation, both the oil cut operation and the regeneration operation, or all of the purge operation, the oil cut operation, and the regeneration operation may be prohibited when the operating rate of the compressor 4 is equal to or higher than a predetermined value.

- In the embodiment described above, a condition for the regeneration operation, a condition for the purge operation, and a condition for the oil cut operation are set, and each operation is executed under these conditions. However, each operation may be executed under one or two of these conditions. If at least one of the three operation modes is executed under the conditions according to the embodiment described above, the dehumidification performance of the air drying circuit 11 can be maintained while reducing the consumption of air by the other operations than the dehumidification operation. For example, the purge operation may be executed under another condition. Alternatively, the purge operation may be omitted from the operation modes of the air drying circuit 11. Alternatively, the oil cut operation may be executed under another condition. Alternatively, the oil cut operation may be omitted from the operation modes of the air drying circuit 11. Alternatively, the regeneration operation may be executed under another condition. Alternatively, the regeneration operation may be omitted from the operation modes of the air drying circuit 11.

- In the embodiment described above, the filter 17 includes an oil trap portion. However, the oil trap portion may be omitted from the filter 17.
- The air drying circuit is not limited to the configuration described above. In short, the air drying circuit can have any configuration capable of executing the dehumidification operation and the regeneration operation. In other words, the air drying circuit is not a circuit for which the second operation mode, and the fourth operation mode to the sixth operation mode are essential operations.

- In the embodiment described above, the air supply system 10 is described as being installed in a vehicle such as a truck, a bus, or a construction machine. As a form other than this, the air supply system 10 may be installed in another moving body such as a passenger car or a railway vehicle.

- The ECU 80 is not limited to a control unit that performs all the processes to be executed by it based on software processing. For example, the ECU 80 may include a dedicated hardware circuit (for example, an application specific integrated circuit (ASIC)) that performs hardware processing for at least a part of the processing to be executed by the ECU 80. That is, the ECU 80 may be configured as circuitry including 1) one or more processors operating according to computer programs (software), 2) one or more dedicated hardware circuits for executing at least some processing among various types of processing, or 3) a combination of the processors) and the dedicated hardware circuit(s). The processor includes a CPU and memories such as a RAM and a ROM, and the memories store program codes or instructions that are configured to cause the CPU to execute processing. The memories, that is, computer-readable media, include any available media that are accessible by general-purpose or dedicated computers.

DESCRIPTION OF THE REFERENCE NUMERALS

4...compressor, 10...air supply system, 11...airdrying circuit, 12...supply circuit, 15...upstream check valve, 16...branch passage, 17...filter, 18...air supply passage, 19...downstream check valve, 20...bypass channel, 21...regeneration control valve, 22...orifice, 25...drainage discharge valve, 26A...governor, 26B...unloading control valve, 27...drainage discharge port as a discharge port, 30...air tank as reservoir portion, 50...pressure sensor, 51...humidity sensor, 52...temperature sensor, 53...pressure sensor, 80...ECU, 80A...storage portion, E61 to E67...wiring.

**Claims**

1. An air supply system, comprising:

   an air drying circuit provided between a compressor for sending compressed air and a reservoir portion for storing dried compressed air, the air drying circuit having a filter for trapping moisture; and
   a control device for controlling the air drying circuit,
   wherein the control device is configured to:

   control the air drying circuit to execute a dehumidification operation of passing the compressed air sent from the compressor through the filter in a forward direction to supply the compressed air to the reservoir portion,
   control the air drying circuit to execute a filter clearance operation of passing the dried compressed air through the filter in a reverse direction to discharge, from a discharge port, a fluid having passed through the filter,
   acquire operation information that indicates an operation state of the compressor, and
   change a frequency of execution of the filter clearance operation based on the acquired operation information on the compressor.

2. The air supply system according to claim 1, wherein the control device is configured to make the frequency of execution of the filter clearance operation higher than the frequency of execution in a first operation state when it is determined, based on the operation information, that the operation state of the compressor is a second operation state, and an amount of air sent from the compressor in a time period in the second operation state is greater than the amount of air sent from the compressor in the time period in the first operation state.

3. The air supply system according to claim 2, wherein the control device is configured not to execute the filter clearance operation when it is determined that the operation state of the compressor is a third operation state, and the amount of air sent from the compressor in a time period in the third operation state is greater than the amount of air sent from the compressor in the time period in the second operation state.

4. The air supply system according to claim 2 or 3, wherein the air drying circuit comprises:

   a connection passage that connects the compressor and the filter to each other;
   a supply passage through which the dried compressed air having passed through the filter passes; and
   a discharge valve connected to a branch passage branched from the connection passage for executing a discharge operation of allowing the branch passage to communicate with the discharge port to discharge the fluid having passed through the filter,
   wherein the control device controls the air drying circuit to executes, as the filter clearance operation, a purge operation of opening the discharge valve and passing dried compressed air in the air drying circuit through the filter in the reverse direction, and
   the control device is configured to change a frequency of the purge operation based on the operation information on the compressor.

5. The air supply system according to claim 4, wherein the control device is configured to:

   acquire a contained moisture amount of the dried compressed air supplied to the reservoir portion,
   determine to execute the purge operation when the contained moisture amount is equal to or greater than a threshold, and
   set the threshold to be lower when the operation state of the compressor is the second operation state than when the operation state of the compressor is not the second operation state.

6. The air supply system according to claim 1, wherein the control device is configured to make the frequency of execution of the filter clearance operation lower than in the frequency of execution in a first operation state when it is determined, based on the operation information, that the operation state of the compressor is a second operation state, and an amount of air sent from the compressor in the second operation state is greater than the amount of air sent from the compressor in the first operation state.

7. The air supply system according to claim 6, wherein the air drying circuit comprises:

   a connection passage that connects the compressor and the filter to each other;
   a supply passage through which the dried compressed air having passed through the filter passes; and
   a discharge valve connected to a branch passage branched from the connection passage for executing a discharge operation of allowing the branch passage to communicate with the discharge port to discharge the fluid having passed through the filter,
   wherein the control device controls the air drying circuit to executes, as the filter clearance operation, a regeneration operation of opening the discharge valve and passing dried compressed air in the reservoir portion through the filter in the reverse direction, and
   the control device is configured to change a frequency of the regeneration operation based on the operation information on the compressor.

8. An air supply system, comprising:

   an air drying circuit provided between a compressor for sending compressed air and a reservoir portion for storing dried compressed air, the air drying circuit having a filter for trapping moisture; and
   a control device for controlling the air drying circuit,
   wherein the control device is configured to:

      control the air drying circuit to execute a dehumidification operation of passing the compressed air sent from the compressor through the filter in a forward direction to supply the compressed air to the reservoir portion,
      control the air drying circuit to execute an oil discharge operation of discharging the compressed air sent from the compressor from a discharge port without passing the compressed air through the filter,
      acquire operation information that indicates an operation state of the compressor, and

change a frequency of execution of the oil discharge operation based on the acquired operation information on the compressor.

9. The air supply system according to claim 8, wherein the control device is configured to make the frequency of execution of the oil discharge operation higher than the frequency of execution in a first operation state when it is determined, based on the operation information, that the operation state of the compressor is a second operation state, and an amount of air sent from the compressor in a time period in the second operation state is greater than the amount of air sent from the compressor in the time period in the first operation state.

10. The air supply system according to claim 9, wherein the control device is configured not to execute the oil discharge operation when it is determined that the operation state of the compressor is a third operation state, and the amount of air sent from the compressor in a time period in the third operation state is greater than the amount of air sent from the compressor in the time period in the second operation state.

11. The air supply system according to any one of claims 1 to 10, wherein the control device is configured to:

acquire an operation time and a non-operation time of the compressor as the operation state of the compressor, and
calculate an operating rate of the compressor based on the acquired operation time and non-operation time.

12. A control method for an air supply system that comprises:

an air drying circuit provided between a compressor for sending compressed air and a reservoir portion for storing dried compressed air, the air drying circuit having a filter for trapping moisture; and
a control device for controlling the air drying circuit, the method comprising, by the control device:

controlling the air drying circuit to execute a dehumidification operation of passing the compressed air sent from the compressor through the filter in a forward direction to supply the compressed air to the reservoir portion,
controlling the air drying circuit to execute a filter clearance operation of passing the dried compressed air through the filter in a reverse direction to discharge, from a discharge port, a fluid having passed through the filter,
acquiring operation information that indicates an operation state of the compressor, and
changing a frequency of execution of the filter clearance operation based on the acquired operation information on the compressor.

13. A control method for an air supply system that comprises:

an air drying circuit provided between a compressor for sending compressed air and a reservoir portion for storing dried compressed air, the air drying circuit having a filter for trapping moisture; and
a control device for controlling the air drying circuit, the method comprising, by the control device:

controlling the air drying circuit to execute a dehumidification operation of passing the compressed air sent from the compressor through the filter in a forward direction to supply the compressed air to the reservoir portion,
controlling the air drying circuit to execute an oil discharge operation of discharging the compressed air sent from the compressor from a discharge port without passing the compressed air through the filter,
acquiring operation information that indicates an operation state of the compressor, and
changing a frequency of execution of the oil discharge operation based on the acquired operation information on the compressor.

14. A control program for an air supply system comprising:

an air drying circuit provided between a compressor for sending compressed air and a reservoir portion for storing dried compressed air, the air drying circuit having a filter for trapping moisture; and
a control device for controlling the air drying circuit,
wherein the control program makes the control device function as:

a dehumidification execution portion for controlling the air drying circuit to execute a dehumidification operation of passing the compressed air sent from the compressor through the filter in a forward direction to supply the compressed air to the reservoir portion,

a filter clearance operation execution portion for controlling the air drying circuit to execute a filter clearance operation of passing the dried compressed air through the filter in a reverse direction to discharge, from a discharge port, a fluid having passed through the filter,

an acquisition portion that acquires operation information that indicates an operation state of the compressor, and

a change portion that changes a frequency of execution of the filter clearance operation based on the acquired operation information on the compressor.

**15.** A control program for an air supply system comprising:

an air drying circuit provided between a compressor for sending compressed air and a reservoir portion for storing dried compressed air, the air drying circuit having a filter for trapping moisture; and
a control device for controlling the air drying circuit,
wherein the control program makes the control device function as:

a dehumidification execution portion for controlling the air drying circuit to execute a dehumidification operation of passing the compressed air sent from the compressor through the filter in a forward direction to supply the compressed air to the reservoir portion,

a discharge operation execution portion for controlling the air drying circuit to execute an oil discharge operation of discharging the compressed air sent from the compressor from a discharge port without passing the compressed air through the filter,

an acquisition portion that acquires operation information that indicates an operation state of the compressor, and

a change portion that changes a frequency of execution of the oil discharge operation based on the acquired operation information on the compressor.

Fig.1

## Fig.2A

```
COMPRESSOR 4:                        ON
REGENERATION CONTROL VALVE 21:CLOSE
GOVERNOR 26A:                        CLOSE
UNLOADING CONTROL VALVE 26B:  CLOSE
```

## Fig.2B

```
COMPRESSOR 4:                        OFF
REGENERATION CONTROL VALVE 21:CLOSE
GOVERNOR 26A:                        OPEN
UNLOADING CONTROL VALVE 26B:  OPEN
```

## Fig.2C

```
COMPRESSOR 4:                        OFF
REGENERATION CONTROL VALVE 21:OPEN
GOVERNOR 26A:                        OPEN
UNLOADING CONTROL VALVE 26B:  OPEN
```

## Fig.2D

```
COMPRESSOR 4:                        ON
REGENERATION CONTROL VALVE 21:CLOSE
GOVERNOR 26A:                        OPEN→CLOSE
UNLOADING CONTROL VALVE 26B:  CLOSE
```

## Fig.2E

```
COMPRESSOR 4:                        OFF
REGENERATION CONTROL VALVE 21:CLOSE
GOVERNOR 26A:                        CLOSE
UNLOADING CONTROL VALVE 26B:  OPEN
```

## Fig.2F

```
COMPRESSOR 4:                        OFF
REGENERATION CONTROL VALVE 21:OPEN
GOVERNOR 26A:                        CLOSE
UNLOADING CONTROL VALVE 26B:  OPEN
```

Fig.3

| 100 | 101 | 102 | 103 | 104 | 105 |
|---|---|---|---|---|---|
| OPERATING RATE RANGE | RANK | CUT-OUT PRESSURE $Po$ | MOISTURE AMOUNT THRESHOLD $Mth$ | TEMPERATURE THRESHOLD $Tth$ | |
| LESS THAN 10% | 1 | Po1 (Low) | Mth1 (High) | Tth1 (High) |
| 10%~30% | 2 | Po1 (Low) | Mth2 (Middle) | Tth2 (Middle) |
| 30%~50% | 3 | Po1 (Low) | Mth3 (Low) | Tth3 (Low) |
| 50%~70% | 4 | Po2 (High) | PROHIBITION | PROHIBITION |
| 70% OR MORE | 5 | Po2 (High) | PROHIBITION | PROHIBITION |

Fig.4

```
              ┌──────────┐
              │  START   │
              └──────────┘
                   │
                   ▼◄───────────────────┐
   ┌──────────────────────────────┐     │
   │ AIR SUPPLY PROCESS (1st Operation) │~S1
   └──────────────────────────────┘     │
                   │                     │
                 ~S2                     │
                  ◇                      │
             STOP SUPPLY?  ──── NO ──────┤
                  ◇                      │
                   │ YES                 │
                   ▼                     │
   ┌──────────────────────────┐         │
   │    CLEARANCE PROCESS      │~S3      │
   └──────────────────────────┘         │
                   │                     │
                   ▼                     │
   ┌──────────────────────────┐         │
   │   NO-AIR SUPPLY PROCESS   │~S4      │
   └──────────────────────────┘         │
                   │                     │
                 ~S5                     │
                  ◇                      │
                END?  ──── NO ───────────┘
                  ◇
                   │ YES
                   ▼
              ┌──────────┐
              │   END    │
              └──────────┘
```

Fig.5

```
                    ┌──────────────┐
                    │    START     │
                    └──────┬───────┘
                           │
                           ▼         ~S100
                    ╱───────────────╲          NO
                  ╱      UPDATE?       ╲──────────────┐
                    ╲───────────────╱                │
                           │ YES                     │
                           ▼                         │
              ┌────────────────────────────┐  ~S101  │
              │ ACQUIRE COMPRESSOR OPERATION STATE │  │
              └────────────┬───────────────┘         │
                           ▼                         │
              ┌────────────────────────────┐  ~S102  │
              │ CALCULATE COMPRESSOR OPERATING RATE │ │
              └────────────┬───────────────┘         │
                           ▼                         │
              ┌────────────────────────────┐  ~S103  │
              │      DETERMINE RANK         │         │
              └────────────┬───────────────┘         │
                           ▼                         │
              ┌────────────────────────────┐  ~S104  │
              │     SET START THRESHOLD     │         │
              └────────────┬───────────────┘         │
                           ▼◄────────────────────────┘
                    ┌──────────────┐
                    │     END      │
                    └──────────────┘
```

Fig.6

```
                    ┌──────────────┐
                    │    START     │
                    └──────┬───────┘
                           │  ~S30
                           ▼
                    ╱───────────────╲       NO
                  ╱   REGENERATION     ╲──────────────┐
                  ╲    REQUIRED?       ╱               │
                    ╲───────────────╱                 ▼        ~S32
                           │ YES                ╱───────────────╲       NO
                           │                  ╱     MOISTURE       ╲──────────────┐
                           │                  ╲ AMOUNT ≥ MOISTURE AMOUNT         │
                           │                  ╲    THRESHOLD?      ╱              │
                           │                    ╲───────────────╱                │
                           │                           │ YES                     │
                           ▼  ~S31                     ▼  ~S33                    ▼  ~S34
         ┌──────────────────────┐   ┌──────────────────────┐   ┌──────────────────────────┐
         │ REGENERATION OPERATION│   │   PURGE OPERATION    │   │ COMPRESSOR STOP OPERATION │
         │    (3rd Operation)    │   │   (2nd Operation)    │   │      (5th Operation)      │
         └──────────┬───────────┘   └──────────┬───────────┘   └─────────────┬────────────┘
                    │◄─────────────────────────┴──────────────────────────────┘
                    ▼
             ┌──────────────┐
             │     END      │
             └──────────────┘
```

24

Fig.7

START

S110

PREDETERMINED
TIME ELAPSED SINCE PREVIOUS
OPERATION? — NO

YES

S111

NUMBER OF TIMES OF
EXECUTION ≤ ALLOWABLE NUMBER OF
TIMES OF EXECUTION? — NO

YES

ACQUIRE TEMPERATURE — S112

S113

TEMPERATURE ≥
TEMPERATURE THRESHOLD? — NO

YES

OIL CUT OPERATION (4th Operation) — S114

END

**INTERNATIONAL SEARCH REPORT**

| | International application No. |
|---|---|
| | PCT/JP2020/007467 |

| A. CLASSIFICATION OF SUBJECT MATTER |
|---|
| B01D 53/26(2006.01)i; B60T 17/00(2006.01)i; F04B 41/02(2006.01)i |
| FI: B01D53/26 230; F04B41/02 A; B60T17/00 B |
| According to International Patent Classification (IPC) or to both national classification and IPC |

| B. FIELDS SEARCHED |
|---|
| Minimum documentation searched (classification system followed by classification symbols) |
| B01D53/26; B60T17/00; F04B41/02 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2004-526628 A (WABCO AUTOMOTIVE UK LIMITED) 02.09.2004 (2004-09-02) claims 1-3, paragraphs [0011], [0034] | 1-3, 6, 8-15<br>4-5, 7 |
| Y | WO 2018/105711 A1 (NABTESCO AUTOMOTIVE CORPORATION) 14.06.2018 (2018-06-14) paragraphs [0064]-[0068], fig. 2, 6 | 4-5, 7 |
| Y | JP 2017-144871 A (NABTESCO AUTOMOTIVE CORPORATION) 24.08.2017 (2017-08-24) fig. 2 | 4-5, 7 |
| Y | Microfilm of the specification and drawings annexed to the request of Japanese Utility Model Application No. 027418/1991 (Laid-open No. 118130/1992) (NISSAN DIESEL MOTOR CO., LTD.) 22.10.1992 (1992-10-22) claim 1, fig. 1 | 5 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 May 2020 (01.05.2020) | 19 May 2020 (19.05.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/007467

| Patent Documents referred in the Report | Publication Date | Patent Family | Publication Date |
|---|---|---|---|
| JP 2004-526628 A | 02 Sep. 2004 | US 2005/0120582 A1 claims 1-3, paragraphs [0017], [0047] WO 2002/096732 A1 EP 1390244 A1 DE 02726346 T1 | |
| WO 2018/105711 A1 | 14 Jun. 2018 | EP 3552894 A1 paragraphs [0066]-[0070], fig. 2, 6 | |
| JP 2017-144871 A | 24 Aug. 2017 | (Family: none) | |
| JP 4-118130 U1 | 22 Oct. 1992 | (Family: none) | |

Form PCT/ISA/210 (patent family annex) (January 2015)

**EP 3 932 523 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010201323 A